# EUROPÄISCHE PATENTSCHRIFT

(11) **EP 2 312 980 B1**
(45) Veröffentlichungstag und Bekanntmachung des Hinweises auf die Patenterteilung: **08.10.2014**
(21) Anmeldenummer: 09781258.0
(22) Anmeldetag: 30.07.2009
(51) Int. Cl.: A47J 31/54

(54) **ELEKTRISCHES HAUSHALTSGERÄT**
ELECTRICAL HOUSEHOLD APPLIANCE
APPAREIL MÉNAGER ÉLECTRIQUE

(30) Priorität: 06.08.2008 DE 102008036688
(43) Veröffentlichungstag der Anmeldung: 27.04.2011
(73) Patentinhaber: BSH Bosch und Siemens Hausgeräte GmbH, 81739 München (DE)
(72) Erfinder: SCHNEIDERBAUER, Gottfried, 84553 Halsbach (DE); STIEF, Peter, 83329 Waging am See (DE)
(86) Internationale Anmeldenummer: PCT/EP2009/059833
(87) Internationale Veröffentlichungsnummer: WO 2010/015557

(56) Entgegenhaltungen:
- EP-A- 0 808 599
- WO-A-2009/092745
- DE-A1- 19 924 279

## Beschreibung

Die vorliegende Erfindung betrifft ein elektrisches Haushaltsgerät, insbesondere einen Kaffeeautomaten, mit zumindest einem manuellen EIN-AUS-Schalter zum zumindest einpoligen Trennen des Haushaltsgeräts von einem elektrischen Netz gemäß dem Oberbegriff des Anspruchs 1.

Ein gattungsgemäßes Haushaltsgerät ist bspw. aus der DE 30 01 041 A1 bekannt, wobei hier der EIN-AUS-Schalter als Mikrounterbrecher ausgebildet ist und sich derart an einem Möbelstück bzw. an einem Kasten angeordnet befindet, dass er geschlossen wird, wenn ein Rollladen am Möbelstück angehoben wird, und der so ausgebildet ist, dass er die Spannung des elektrischen Netzes dem Haushaltsgerät bei geöffnetem Rollladen zuführt. Umgekehrt wird eine Verbindung zum elektrischen Netz automatisch getrennt bzw. abgestellt, wenn der Rollladen geschlossen wird.

Aus der EP 0 869 731 B1 ist eine Kaffeemaschine bekannt, die einen Schalter zur In- und Außerbetriebssetzung aufweist. Mit dem Schalter ist somit ein Trennen der Kaffeemaschine vom elektrischen Netz möglich.

Schließlich ist aus der DE 10 2005 041 776 B3 ein Haushaltsgerät, insbesondere in der Art eines Getränkebereiters, bekannt, weiches eine Wärmseinrichtung aufweist. Ein Heizelement der Wärmeeinrichtung, wird dabei zeitlich nach der Auswahl eines in der Zukunft liegenden Ausschaltzeitpunkts des Haushaltgeräts automatisch ausgeschaltet. Darüber hinaus weist das Haushaltsgerät ein Bedienelement auf, mittels dessen das Haushaltsgerät unabhängig von den zeitlich vor dem Betätigen des Bedienelements an dem Haushaltsgeräts vorgenommenen Einstellungen, manuell ausschaltbar ist.

Und die DE 199 24 279 A1 offenbart eine Vorrichtung zur automatischen Stromabschaltung eines Stromkreislaufs einer Haushaltsmaschine mit einem mechanisch mittels eines Tasters zu schließenden Schaltelement, die dadurch gekennzeichnet ist, dass eine elektromagnetische Spule zur automatischen Betätigung des Schaltelementes vorgesehen ist.

Neben einem Trennen elektrischer Haushaltsgeräte vom Netz in deren Nicht-Gebrauchszustand, um dadurch bspw. eine Brandgefahr zu minimieren, rückt aufgrund stetig steigender Energlepreise auch ein Energieverbrauch von elektrischen Haushaltsgeräten in deren Stand-by-Modus zunehmend in den Vordergrund ökonomischer Betrachtungen. Die Forderung geht dabei ganz klar in Richtung eines Null-Energieverbrauchs im Stand-by-Modus.

Die vorliegende Erfindung beschäftigt sich mit dem Problem, für ein gattungsgemäßes Haushaltsgerät, eine verbesserte Ausführungsform anzugeben, die ein besonders zuverlässiges Trennen des elektrischen Haushaltsgeräts vom Netz ermöglicht.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, an einem elektrischen Haushaltsgerät, bspw. an einem Kaffeeautomaten, einen manuell zu betätigenden EIN-AUS-Schalter vorzusehen, mit welchem das Haushaltsgerät zumindest einpolig von einem elektrischen Netz abtrennbar ist, sowie eine Steuerungseinrichtung, mit welcher der manuell betätigbare EIN-AUS-Schalter zusätzlich elektrisch betätigbar ist, wobei die die Steuerungseinrichtung so ausgebildet ist, dass diese ein Durchführen noch notwendiger Abschaltoperationen bewirkt, bevor sie den EIN-AUS-Schalter betätigt. Hierdurch kann einem Benutzer des Haushaltsgeräts ermöglicht werden, dieses In jedem Fall durch ein manuelles Betätigen des EIN-AUS-Schalters unverzüglich vom Netz zu trennen. Daneben ermöglicht die Steuerungseinrichtung, welche bspw. in der Art einer Aktuatoreinrichtung ausgebildet ist, die elektrische Betätigung des, vorzugsweise mechanischen, EIN-AUS-Schalters, welche bspw. in Abhängigkeit unterschiedlichster Parameter, vorzugsweise der Zeit, den EIN-AUS-Schalter schaltet. Da die Steuerungseinrichtung ebenfalls auf den mechanischen EIN-AUS-Schalter einwirkt, ist zum Trennen des Haushaltsgeräts vom elektrischen Netz lediglich ein einziger Schalter erforderlich, welcher sowohl manuell als auch elektrisch betätigbar ist, und wodurch sich die Teilevielfalt und verbunden damit die Lager- und Logistikkosten sowie die Fertigungskosten für ein derartiges Haushaltsgerät reduzieren lassen.

Bei einer vorteilhaften Weiterbildung der erfindungsgemäßen Lösung, weisen die Steuerungseinrichtung oder der EIN-AUS-Schalter ein Stromstoßrelais oder ein Selbsthalterelais auf oder sind als ein derartiges Relais ausgebildet. Stromstoßrelais sind elektromagnetisch betätigbare Schalter, wobei der Schalter bei jedem Stromstoß einen elektrischen Impuls erhält, der eine Schaltzustandsänderung bewirkt. Diese Schaltzustandsänderung wird dabei bis zum nächsten elektrischen Impuls mechanisch oder elektronisch gespeichert. Selbstverständlich ist dabei denkbar, dass derartige Stromstoßrelals nicht nur zwei Schaltzustände, nämlich EIN und AUS, ermöglichen, sondern auch mehr Schaltzustände. In ähnlicher Weise funktionieren auch so genannte Selbsthalterelais, die einen eingeschalteten Zustand beibehalten. Selbsthalterelais sind dabei einfache binäre Speicherglieder, deren Wert am Ausgang von den Signalen an den Eingängen und dem bisherigen Zustand am Ausgang abhängt. Generell sind sowohl Selbsthalterelais als auch Stromstrossrelais heutzutage in nahezu beliebiger Ausführungsform kostengünstig herstellbar.

Bei einer weiteren vorteilhaften Ausführungsform der erfindungsgemäßen Lösung, ist die Steuerungseinrichtung derart ausgebildet, dass die Betätigung des EIN-AUS-Schaltere, das heißt insbesondere dessen Ausschalten, nach einer vordefinierten Zeitspanne automatisch erfolgt. Denkbar ist somit, dass die Steuerungseinrichtung das Haushaltsgerät nach einer vordefinierten Zeitspanne der Nicht-Inbetriebnahme selbstständig und zumindest einpolig, vorzugsweise vollständig, vom Netz trennt und dadurch die Gefahr, die von einem mit dem Netz dauernd verbundenen Haushaltsgerät ausgeht, bspw. eine Brandgefahr, reduziert. Die Zeitspanne, nach welcher die Steuerungseinrichtung das Haushaltsgerät vom Netz trennt, das heißt den EIN-AUS-Schalter betätigt, kann dabei individuell in Abhängigkeit des jeweiligen Haushaltsgeräts festgelegt und auf dieses ausgerichtet werden.

Erfindungsgemäß ist die Steuerungseinrichtung derart ausgebildet, dass diese ein Durchführen noch notwendiger Abschaltoperationen bewirkt, bevor sie den EIN-AUS-Schalter betätigt. Derartige Abschaltoperationen, sind ein Spülen oder ein Zurückfahren in eine Basisstellung, und gewährleisten ein kontrolliertes Ausschalten des Haushaltsgeräts, so dass dieses erst dann vom Netz getrennt wird, wenn die üblicherweise noch durchzuführenden Abschaltoperationen abgeschlossen sind. So wird bspw. verhindert, dass eine Kaffeemaschine durch die elektrische Steuerungseinrichtung abgeschaltet wird, bevor ein abschließender Spülvorgang durchgeführt wurde. Dies soll insbesondere verhindern, dass der Spülvorgang nicht durchgeführt wird und dadurch in der Kaffeemaschine bei längerer Nicht-Inbetriebnahme Kaffee oder Milchreste eintrocknen und zu Verschmutzungen bzw. Beschädigungen führen.

Bei einer vorteilhaften Weiterbildung der erfindungsgemäßen Lösung, ist zusätzlich zur Steuerungseinrichtung noch ein separates manuelles Bedienelement vorgesehen, über welches die Steuerungseinrichtung zum elektrischen Betätigen des EIN-AUS-Schalters aktivierbar ist. Neben dem direkten mechanischen Betätigen des EIN-AUS-Schalters, kann dieser somit zusätzlich entweder automatisch über die Steuerungseinrichtung oder indirekt mittels des Bedienelements über die Steuerungseinrichtung geschaltet werden. Hierdurch wird eine weitere Option zur Betätigung des mechanischen EIN-AUS-Schalters gegeben, wobei das zusätzliche Bedienelement bspw. als Sensortaste ausgebildet sein kann. Die Betätigung des zusätzlichen Bedienelements bewirkt dabei vorzugsweise ein sofortiges Abschalten des Haushaltsgeräts, das heißt ein sofortiges Trennen desselben vom elektrischen Netz ohne bspw. weitere Wartezeiten für evtl. Abschaltoperationen abwarten zu müssen.

Mit dem erfindungsgemäßen Haushaltsgerät ist es somit möglich, dieses sowohl direkt mechanisch als auch indirekt automatisch über die Steuerungseinrichtung vom Netz zu trennen, so dass dieses bspw. auch dann vom Netz getrennt wird, wenn zwar der mechanische EIN-AUS-Schalter nicht mechanisch betätigt wurde, diese Betätigung jedoch von der Steuerungseinrichtung ausgelöst wurde. Durch die insbesondere automatische Trennung des Haushaltsgeräts vom Netz, kann ein Null-Energieverbrauch desselben in dessen Nicht-Gebrauchszustand erreicht werden, was bei ständig steigenden Stromkosten von besonderem Vorteil ist und als solcher auch beim Kunden hohe Wertschätzung erfährt. Die mittels des erfindungsgemäßen Haushaltsgeräts mögliche Netztrennung erhöht auch die Sicherheit, da das Haushaltsgerät vom Netz getrennt ist und somit die Gefahr von Bränden bzw. elektrischen Kurzschlüssen minimiert werden kann.

## Patentansprüche

1. Elektrisches Haushaltsgerät, insbesondere ein Kaffeeautomat, mit zumindest einem manuell und mittels einer Steuerungseinrichtung elektrisch betätigbaren EIN-AUS-Schalter zum zumindest einpoligen Trennen des Haushaltsgeräts von einem elektrischen Netz, **dadurch gekennzeichnet, dass** die Steuerungseinrichtung so ausgebildet ist, dass diese ein Durchführen eines Spülvorgangs oder ein Zurückfahren in eine Basisstellung bewirkt, bevor sie den EIN-AUS-Schalter betätigt.

2. Haushaltsgerät nach Anspruch 1, **dadurch gekennzeichnet, dass** die Steuerungseinrichtung oder der EIN-AUS-Schalter ein Stromstoßrelais oder ein Selbsthalterelais aufweisen oder als ein derartiges Relais ausgebildet sind.

3. Haushaltsgerät nach Anspruch 1 oder 2, **dadurch gekennzeichnet, dass** die Steuerungseinrichtung so ausgebildet ist, dass die Betätigung des EIN-AUS-Schalters, das heißt dessen Ausschalten, nach einer vordefinierten Zeitspanne automatisch erfolgt.

4. Haushaltsgerät nach einem der Ansprüche 1 bis 3, **dadurch gekennzeichnet, dass** ein separates manuelles Bedienelement vorgesehen ist, über welches die Steuerungseinrichtung zum elektrischen Betätigen des EIN-AUS-Schalters aktivierbar ist.

5. Haushaltsgerät nach Anspruch 4, **dadurch gekennzeichnet, dass** das manuelle Bedienelement ein unmittelbares Schalten des EIN-AUS-Schalters bewirkt.

## Claims

1. Electrical household appliance, especially an automatic coffee maker, with at least one ON-OFF switch able to be actuated manually and electrically by means of control device for at least single-pole disconnection of the household appliance from an electrical network, **characterised in that** the control device is embodied so that said device causes a rinsing process to be carried out or a movement back into a basic position before it actuates the ON-OFF switch.

2. Household appliance according to claim 1, **characterised in that** the control device or the ON-OFF switch include a surge relay or a latching relay or are embodied as a such a relay.

3. Household appliance according to claim 1 or 2, **characterised in that** the control device is embodied such that the actuation of the ON-OFF switch, i.e. its switching off, takes place automatically after a predefined period of time.

4. Household appliance according to one of claims 1 to 3, **characterised in that** a separate manual control element is provided, via which the control device is able to be activated for electrical actuation of the ON-OFF switch.

5. Household appliance according to claim 4, **characterised in that** the manual control element causes the ON-OFF switch to switch immediately.

## Revendications

1. Appareil ménager électrique, notamment machine à café, comprenant au moins un interrupteur marche-arrêt pouvant être actionné manuellement et électriquement au moyen d'un dispositif de commande pour la déconnexion au moins unipolaire de l'appareil ménager d'un réseau électrique, **caractérisé en ce que** le dispositif de commande est exécuté de manière à provoquer une exécution d'un processus de lavage ou un retour dans une position de base avant d'actionner l'interrupteur marche-arrêt.

2. Appareil ménager selon la revendication 1, **caractérisé en ce que** le dispositif de commande ou l'interrupteur marche-arrêt comprend un relais à impulsion ou un relais à auto-entretien ou est exécuté comme un relais de ce type.

3. Appareil ménager selon la revendication 1 ou 2, **caractérisé en ce que** le dispositif de commande est exécuté de telle sorte que l'actionnement de l'interrupteur marche-arrêt, c'est-à-dire son arrêt, se produit automatiquement après un laps de temps prédéfini.

4. Appareil ménager selon l'une des revendications 1 à 3, **caractérisé en ce que** l'on prévoit un élément de manoeuvre manuel séparé grâce auquel le dispositif de commande peut être activé pour l'actionnement électrique de l'interrupteur marche-arrêt.

5. Appareil ménager selon la revendication 4, **caractérisé en ce que** l'élément de manoeuvre manuel provoque une commutation directe de l'interrupteur marche-arrêt.
